# EUROPEAN PATENT SPECIFICATION

(11) **EP 0 381 892 B1**
(45) Date of publication and mention of the grant of the patent: **05.04.1995**
(21) Application number: 89312524.5
(22) Date of filing: 30.11.1989
(51) Int. Cl.: G09G 1/00

(54) **Computer display windowing systems**
Rechner-Anzeigesysteme mit Fenstern
Systèmes d'affichage pour ordinateur comportant des fenêtres

(30) Priority: 06.02.1989 US 306125
(43) Date of publication of application: 16.08.1990
(73) Proprietor: International Business Machines Corporation, Armonk, N.Y. 10504 (US)
(72) Inventor: Loucks, Larry Keith, Austin Texas 78750 (US); Simpson, Richard Ormond, Austin Texas 78750 (US)
(74) Representative: Bailey, Geoffrey Alan

(56) References cited:
- EP-A- 0 065 423
- EP-A- 0 247 827
- EP-A- 0 261 463
- WO-A-85/02049
- WO-A-87/00329
- GB-A- 2 162 726
- GB-A- 2 180 729

## Description

The present invention relates to computer display windowing systems, and more specifically to clipping systems for use therein.

Recent developments in the technology associated with data processor-controlled interactive display terminals have provided the operator with the capability of displaying the contents of several documents or records on a display terminal screen at the same time. The contents are typically displayed in a plurality of often overlapping windows, wherein each window displays the contents of a particular document or computer file. U.S. Patent US-A-4,586,035 and US-A-4,714,918 are illustrative of the manner in which such overlapping windows are used in computer systems.

In a typical windowing system such as X-Windows (X-Windows is a trademark of IBM Corporation), as described in X-Windows User Guide and Reference for the IBM RT-PC, 1987, a single physical screen is used to display several windows in a "space-multiplexed" fashion (IBM is a trademark of IBM Corporation). In the newer of such computer systems, several applications can be simultaneously run on the computer. Each application being run on the computer typically "owns" one or more windows on the display screen. Normally, the applications are independent of one another, and, accordingly, the contents of one screen are independent of the contents of the other screens. The windows may be of different sizes and may partially or completely overlap.

The windows are typically under the control of a software-based display manager system which views the windows as a stack so that there is a total ordering of the windows with respect to depth. For example, at any given time, one window is on top, one is on the bottom and the other windows are ordered somewhere in between. Since a window normally does not occupy the entire display area of a display screen and/or may be partly or totally obscured by other windows, applications running on multi-tasking computer systems having windowing capabilities normally are not allowed to write directly to the display adapter in order to generate displays associated with such applications.

Typically, the applications in such a computer system must request a window manager to transmit data to the display screen on its behalf. The software-based window manager insures that the output for an application is written only to the window(s) owned by that application by "clipping" the output request and discarding those portions of the graphic or text output from that application which would lie outside the window or portion thereof formed on the screen for an application. This clipping is normally done by a software-based utility program, and it can be very time-consuming.

Recently, there have been significant advancements in the field of interactive computer graphics to speed up the processing of data necessary to generate the complex computer-generated pictures representative of the present state-of-the-art. Such techniques are described, for example, by J.D. Foley and A. Van Dan in Fundamentals of Interactive Computer Graphics, Addison-Wesley, 1982. One of the techniques commonly used in the field of three-dimensional interactive computer graphics is a "Z-buffer". A Z-buffer is a simple hardware device used to eliminate hidden lines and hidden surfaces when showing a computer-generated picture on a raster-scan display.

In the past, interactive computer graphic systems would normally have used special-purpose computers to generate models of three dimensional objects typically consisting of many polygons. Each polygon had its own location and orientation in three dimensional space, as well as its own color and intensity information.

The display of a three-dimensional object by a computer system typically requires computing a color/intensity value for each pixel. For a given orientation of the object being viewed on a screen, a pixel on the display screen may potentially come from more than one polygon in the object. The pixel value that is displayed on such systems is from the polygon which is "in front of" any other polygons in the line of sight from the viewer through the pixel in question.

When a picture of a three dimensional object is displayed in such computer graphic systems, the polygons making up the object are processed in some order. This order may be the natural order in which the polygons are encountered, which depends on the way the data structure defining the object is constructed, or it may be sorted in some way to make the output process simpler. For example, the polygons may be sorted by depth (z-value) so that those polygons which are further from the observer are encountered first. This sorting is typically done in computer graphic systems so that any particular scene may be displayed on a screen by processing the polygons in a sorted order and, for each polygon, inserting the proper values in the pixels covered by that polygon. A pixel may be written to several times, depending on how many polygons in any given three dimensional object overlap the point on the screen defined by the pixel. Since the polygons are sorted by depth, the last value written to any pixel will be the value for that pixel's closest polygon. In other words, those polygons which are nearest the observer will obscure polygons further back.

It has been found that sorting polygons by depth is usually not desirable because of the lengthy processing time involved and because the sorting was not fool-proof. For example, polygons which intersect one another or which overlap one another in complicated ways in three dimensional space cannot necessarily be sorted based upon one z-value; rather, sorting actually needs to be done for each pixel if the sorting is to be completely accurate. If the object is rotated, is moved with respect to the background, or is moved with respect to other objects in the screen, or if the viewpoint of the observer changes, then the sort must be done again.

It has been found that in such three-dimensional computer graphics applications, the use of a Z-buffer avoids the need for any type of sort by saving the depth information (z-value) for each pixel along with the colour/intensity value. See Foley and Van Dam at pp. 560-561. The use of a Z-buffer, thus, allows polygons making up a scene to be processed in any order because depth information is tracked per pixel rather than per polygon. Accordingly, strange overlappings of polygons and intersecting polygons will not have an adverse effect on generating the computer image.

EP-A-0247827 relates to a computer system with a multi-window presentation manager, and addresses the problem of simplifying an operator's operation of selection of a particular window for working in. The presentation manager has a window manager which determines window display priorities and a CPU which accesses both a data store and a priority memory and provides clipping of data prior to transmission to a refresh buffer.

GB-A-2162726 discloses a display system capable of operating with multiple windows, which is adapted to determine the parts of a graphic line primitive to be displayed for lower priority, overlapped windows. GA-A-2162726 discloses use of a random access store of indications of the position and size of each window, together with an indication of the priority level of the window.

Viewed from one aspect the present invention provides a computer system having: a display adapter with a refresh buffer; an interactive display terminal with a screen display on which is formed a plurality of at least partially overlapping windows, each window displaying subject matter generated by one of a plurality of applications (A to n) running on the computer system and then transmitted to the display adapter; means for requesting a rearrangement of the depths of the plurality of windows relative to a reference position from a current arrangement to a new arrangement; manager means for determining the depth of the subject matter associated with each of the windows, wherein said manager means, in response to the input request, determines the new depth of the subject matter in each of the plurality of windows affected by the requested rearrangement and outputs new depth values for the affected subject matter and instructs each application with a window with affected subject matter to retransmit at least the portion of the subject matter associated with each window which will become visible as a result of the rearrangement; and depth buffer means in the display adapter for storing the depth values of the subject matter associated with each of the windows displayed on the screen, wherein said depth buffer means includes means for comparing the depth value for the re-transmitted subject matter to the depth value for the displayed subject matter in response to the input request and, if the retransmitted subject matter has a depth value associated with the same window or a window closer to the viewer, the comparator means instructs the refresh buffer to store the retransmitted subject matter for refreshing the screen.

The disadvantages associated with the time-consuming software clipping used in updating windows in computer systems having a shared display surface is overcome by the present invention by the addition of a hardware-based depth buffer for windows in the conventional display adapter. The present invention also reduces the time needed to update or rearrange the windows by allowing a particular application to be given direct access to the display adapter of the computer system, while insuring the integrity of the subject matter on windows belonging to other applications being run on the computer system.

In preferred embodiments, the subject matter associated with each of the windows is defined as an array of pixel values having specific pixel addresses.

It will be seen that the computer system includes a depth buffer for receiving and storing the depth values of the subject matter associated with each of the overlapping screens currently being displayed on the screen. In response to the retransmission of subject matter from the affected applications and the depth values associated therewith in response to the input request, a comparator in the depth buffer compares the depth values for the newly transmitted subject matter to the depth values for the subject matter being currently displayed on the screen. If the new subject matter has a depth value associated with the same window or a window closer to the viewer, the buffer notifies the refresh buffer to store the new subject matter for the purpose of refreshing the screen and notifies the depth buffer to store the new depth values.

The present invention may be implemented in several alternative hardware configurations. In one configuration, a depth value associated with the subject matter in a window is a concatenation of the window depth position and the depth value of the subject matter within the window. The depth buffer then compares the new concatenated value with the current concatenated value to determine whether the refresh buffer and depth buffer should store the new subject matter and depth values, respectively.

In another embodiment, the depth buffer includes a window depth table which stores the current depth position associated with each window identification. In this embodiment, the window manager, in response to an input request, outputs new pixel depth values for each window identification listed in the window depth table. The comparator then reads from the window depth table the depth value of the window identification for each pixel density currently in the depth buffer and the depth value for the new window identification and compares the respective depth values obtained from the window depth table.

In another embodiment of the present invention, the depth buffer includes a first and second comparator wherein the first comparator compares the new window identification with the current window identification and the second comparator compares the pixel depth value associated with each current window identification with the new pixel depth value associated with the new window identification. If the first comparator determines that the current window and new window identifications are equal and the second comparator determines that the new pixel value is less than or equal to the current pixel value, a logic unit coupled to the outputs of the first and second comparators notifies the refresh buffer to store the new pixel values and notifies the depth buffer to store the new window identification.

In another embodiment, the depth buffer includes both a first buffer array and a second buffer array, wherein the first buffer array stores the current window identification for the subject matter being displayed on each of the overlapping windows and the second buffer array stores the current pixel depth value of the subject matter being displayed on each of the overlapping windows. The depth buffer also includes a first comparator coupled to the first buffer array for comparing the new window identification with the current window identification wherein, if the current and new window identifications are the same, the first comparator outputs an enable signal. The second comparator is coupled to the second buffer array for comparing the current pixel depth value with the new pixel depth value upon receiving the enable signal from the first comparator. If the new pixel depth value is less than or equal to the current pixel depth value, the second comparator outputs a signal to the first and second buffer array which notifies the first buffer array to store the new window identification and the second buffer array to store the new depth value.

In another embodiment of the present invention applicable to two-dimensional images within each of a plurality of overlapping windows, the depth value associated with the subject matter within a window on a screen comprises only a window identification wherein the depth buffer stores only the current window identification. In response to an input request, the window manager outputs a new window identification to the depth buffer wherein the comparator in the depth buffer compares the window identification of the newly transmitted subject matter to the window identification of the currently displayed subject matter. If the new window identification identifies the same window or a window closer to the viewer, the comparator outputs signals to the refresh buffer and depth buffer to direct the refresh buffer to store the new subject matter for refreshing the screen display with the new subject matter and to direct the depth buffer to store new window identifications.

Viewed from another aspect the invention provides a computer system capable of running a plurality of applications having a display adapter with a refresh buffer; an interactive display terminal with a screen display on which is formed a plurality of at least partially overlapping windows, each window displaying subject matter different from that displayed on the remainder of the screen; means for requesting a rearrangement of the depth positions of the plurality of windows relative to a reference position from a current arrangement to a new arrangement; manager means for determining the depth position of each of the plurality of windows and assigning a depth value to the subject matter associated with each of the windows, wherein said manager means, in response to the input request, determines the new depth positions of the plurality of windows, assigns a new depth value to the subject matter associated with each affected window and outputs such depth values; and buffer means for storing the depth values of the subject matter associated with each of the windows being displayed on the screen, wherein said buffer means includes means for comparing the depth value for the newly transmitted subject matter to the depth value for the displayed subject matter in response to the input request and, if the new subject matter has a depth value associated with the same window or a window closer to the viewer, the comparator instructs the refresh buffer to store the newly transmitted subject matter for refreshing the screen.

Viewed from a further aspect the invention provides a graphics adaptor card for use with a computer system producing a display including a plurality of at least partially overlapping windows, said card comprising a refresh buffer adapted to store pixel data representative of pixels of said display, a buffer means adapted to store data indicative of which of said windows controls which of said pixels and comparator means responsive said data stored in said buffer means to inhibit updating of said refresh buffer with pixel data received by said card if said received pixel data is not associated with said window controlling said pixel whereby clipping of said windows is carried out by said card.

Embodiments of the invention will now be described, by way of example only, with reference to the accompanying drawings in which:

Fig. 1 is a generalized diagrammic representation of a conventional computer system which may be adapted to the practice of the present invention.

Fig. 2 is a diagrammic representation of a interactive display portion of the computer system of Figure 1.

Fig. 3 illustrates a combination of logic units associated with forming a plurality of at least partially overlapping windows on an interactive display monitor for use with the present invention.

Fig. 4A illustrates the initial position of a plurality of at least partially overlapping windows on a screen display.

Fig. 4B illustrates the reordering of the plurality of at least partially overlapping windows of Fig. 4A when the top window is moved to the bottom.

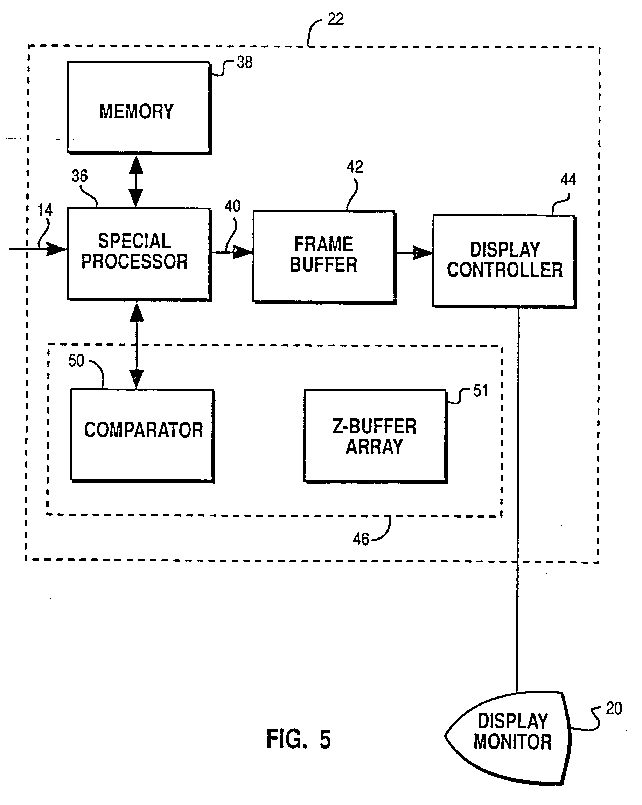

Fig. 5 is a diagrammic representation of a display adapter which may be utilized in the practice of the present invention.

Fig. 6 is a diagrammic representation of a Z-buffer system which may be utilized in one embodiment of the present invention.

Fig. 7A illustrates the relative position of a stack of at least partially overlapping windows on a screen display, together with a stylized grid of pixel values representative of the depth of the subject matter being displayed on the screen;

Fig. 7B illustrates a screen display of a reordered windows in 7A, together with a stylized grid of pixel values representative of the changes in the depth of the subject matter being displayed on the screen which are generated by the window manager in a first embodiment of the present invention.

Fig. 8 is a diagrammic representation of a second embodiment of a Z-buffer system which may be used to practice the present invention.

Fig. 9A illustrates the relative position of a plurality of at least partially overlapping windows on the screen of the display monitor, together with a grid of pixels representative of the window identification of the subject matter being displayed;

Fig. 9B illustrates a screen display of the reordered windows of Fib.9A, together with a stylized grid of pixels representative of the window identification of the subject matter being displayed on the screen which are changed by the window manager in the second embodiment of the present invention.

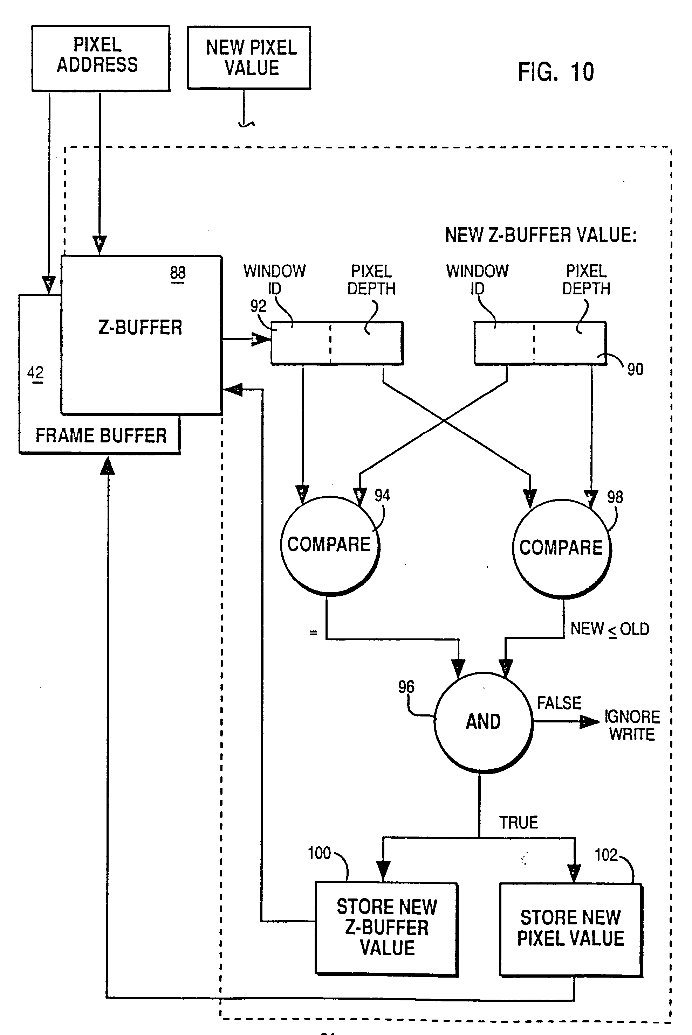

Fig. 10 is a diagrammic representation of a third embodiment of a Z-buffer system which may be used to practice the present invention.

Fig. 11A illustrates a plurality of at least partially overlapping windows on the display screen of a display monitor, together with stylized grid of pixels representative of the window identification of the subject matter being displayed on the screen.

Fig. 11B illustrates a screen display wherein the windows of Fig. 11A are reordered, together with a stylized grid of pixels representative of the changes in the window identification of the subject matter being displayed on the screen which is changed by the window manager in the third embodiment of the present invention.

Fig. 12 is a diagrammic representation of a fourth embodiment of a Z-buffer system which may be used to practice the present invention.

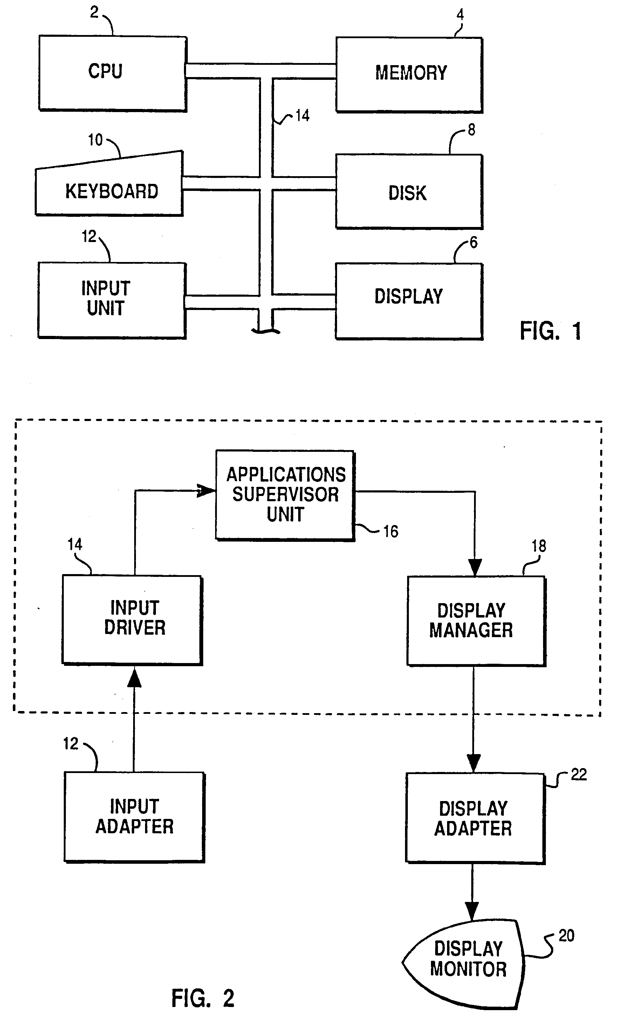

For a more detailed understanding of the present invention, reference is made to Fig. 1, which illustrates the major components of the prior art computer system which may be adapted to accomplish the present invention. The CPU 2 of the conventional computer system is supported by system memory 4 in which all of the applications programming is stored. In recent prior art computer systems, the CPU 2 can run two or more applications concurrently. The CPU 2, in combination with memory 4, controls a display unit 6. The computer system typically has supplemental disk storage 8. Input to the system may be accomplished through a keyboard 10, which may be used to input a specific command or which may be used to move the cursor on the display screen of the display unit 6 to a menu-based command. Alternatively, an input command may be received from another input unit 12, a mouse for example. The elements in this computer system are interconnected over a system bus 14.

Computer systems which may be adapted to embody the present invention include an IBM RT having a CPU based on reduced instruction set architecture (RISC) supported by 2 MB or more of memory and Version 2.2 or later of the AIX operating system. For some embodiments, an IBM PS/2 having a conventional Intel 80286 or 80386 microprocessor supported by an OS/2 operating system and 1 MB or more units of memory may be used (AIX, PS/2 and OS/2 are trademarks of IBM Corporation: Intel is a trademark of Intel Corporation).

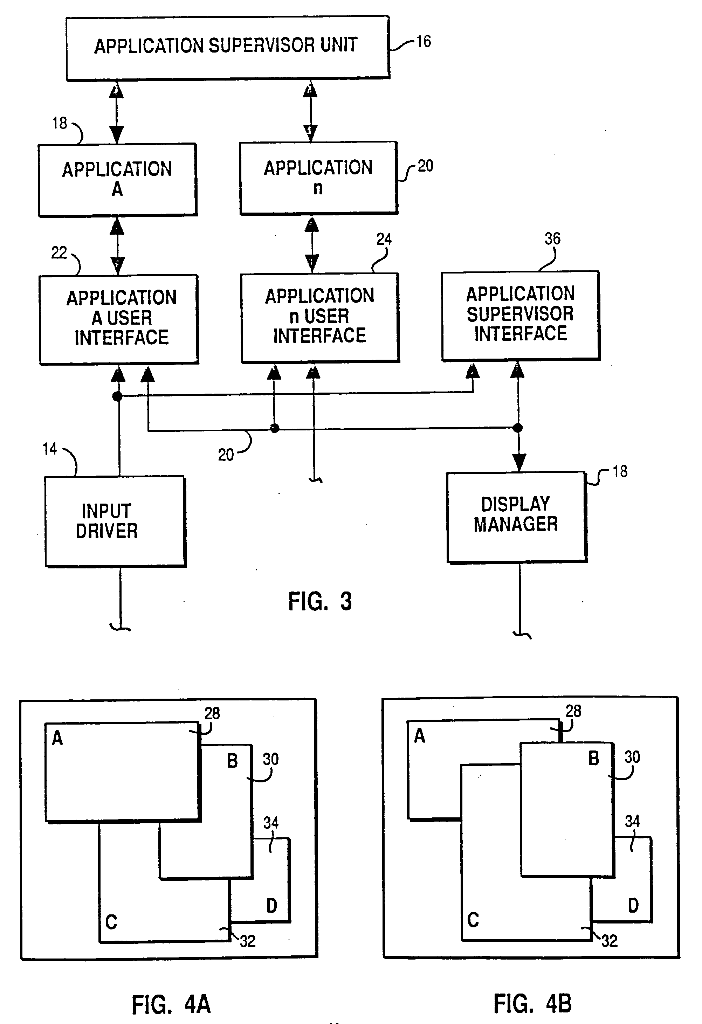

The system logic and apparatus in such computer systems are shown in more detail in Figs. 2 and 3. In Fig. 2, an input may be provided through a conventional input adapter 12, which is connected to the computer system though an input driver 14, which has the conventional apparatus and logic required to interface the input operations to the particular data processing system implementing the present invention. The driver 14 serves the function of converting the signals received from the input adapter to data which is operable within the present invention.

Routines and logical operations required for the present invention are usually supervised by an applications supervisor unit 16, which will be subsquently described. Changes to the display 6 are controlled by a display manager 18, which communicates with a display monitor 20 through a display adapter 22. The display adapter 22 adapts or converts the commands from the display manager to signals which are more readily usable by the display monitor 20.

The software for implementing the present invention is stored in memory 4 and carried out under the direction of the application supervisor unit 16, which is typically also stored in memory 4 under the control of CPU 2. This software will now be described in more detail with respect to Fig. 3.

In recent computer systems, numerous applications designated application "A", 18, through to application "n", 20, can be operated concurrently. Output of each of these different applications may be viewed on different windows "A, B, C, D, ....n" formed on the interactive screen display monitor 20, and designated 28, 30, 32 and 34, respectively, in Fig. 4. The user of the computer system interfaces with each application through the input adapter 12 and the corresponding input driver 14 to application user interfaces 22 and 24 for applications A and "n", respectively. The interfaces typically also contain a conventional echo manager which directly conveys the input commands directly with the resulting display changes for a particular window to the display manager 18 over bus 20. The application supervisor unit 16 coordinates and multiplexes these various individual window operations and also exercises control over the display manager 18 through the application interface 26. The display manager 18 typically includes a window manager for controlling the relative position of the overlapping windows as a result of inputs received via bus 20 from input driver 14.

In such computer systems having an interactive display 6 composed of a display monitor 20 and display adapter 22, the plurality of overlapping windows A, B, C, and D, formed on the screen of the monitor, such as shown in Fig. 4, wherein each window displays subject matter originating from different applications, e.g. A, B, C, and D, run simultaneously on CPU 2. In effect, each application "owns" a window on the screen. Normally the applications are independent of one another so the contents of one window have nothing to do with the contents of another window owned by a different application. The windows may be of different sizes and may overlap, as shown in Fig. 4.

In order to change the relative position of the windows, the user inputs a request through input unit 12. For example, if the user wishes to push the top window A to the bottom, window B becomes the new top window. All of window B is now visible and part of window C which was obscured by window A is now visible as well. When all or part of the window becomes visible or "is exposed", the application which owns the window is notified by the window manager that it must regenerate part or all of the contents being displaced on its window. It is each application's responsibility to rewrite the part of the window that was newly exposed. Optionally, each application can simply rewrite its entire window.

In the present example (Fig. 4), the application for window B 30 must at least rewrite the upper-left portion of its window B and the application for window C must do the same with a small part of the upper-left part of its window C. Because each window does not occupy the entire display screen, it may be partly or totally obscured by the other windows.

Each application is not allowed to write directly to the display adapter 22 in order to generate a display associated with each application. Rather, each of the applications A, B, C, and D must request the window manager to transmit data to the display adapter 22 for refreshing its portion of the display screen on that particular application's behalf. The software-based window manager thus ensures that the output for a given application is written only to the window(s) owned by the application by "clipping" the output for that particular application which is partly or totally obscured by other windows. This clipping has, in the past, been done by software and is quite time-consuming.

The outputted subject matter from each application A, B, C, and D, are transmitted over the bus 14 to a special processor 36 in the display adapter which controls the operations of the display adapter 22. The special processor 22 has associated dedicated memory 38 for storing data on which it operates. The processor converts the subject matter transmitted from the CPU 2 into a two-dimensional array of pixel values having specific pixel addresses which relate to specific points on the display screen, wherein those portions of the transmitted subject matter of each application which is obscured by a partial or overlapping window of another application has already been clipped. The special processor then conveys this clipped data, in its converted form, over a bus 40 to a frame or refresh buffer 42. The frame buffer or refresh buffer 42, typically a RAM array, stores the pixel values in digital form in the relative location at which they will appear on the actual screen of the display monitor 20. These pixel values are then converted by display controller 44 to signals which are used to project a representation of the subject matter onto the display monitor 20. Typically, the display must be refreshed by the retransmission of the pixel values located in the frame buffer 42 every 1/30 or 1/60 of a second.

In the computer system of the present invention a novel Z-buffer subsystem is added to the display adapter 22 to substantially reduce the amount of software clipping that the window manager must perform while giving a computer application direct access to the display adapter 22. In effect, the software-based window manager treats each of the windows as a polygon in three-dimensional space. For the specific windowing purposes desired by the present invention, each polygon is parallel to the plane of the background and orthogonal to the line of sight of the user; thus, a single depth value serves for each polygon. Accordingly, no two polygons or "windows" have the same depth, so there is never an ambiguity about which polygon is "in front" when computing the value of a pixel. It should be noted, however, that this invention can be adapted to windowing systems wherein the subject matter being displayed in each window constitutes a subject matter situated in three-dimensional space.

Five alternative embodiments of a Z-buffer system 46 to assist a window manager are set out in more detail below. In each embodiment, the window manager of the display manager 18 decides on the new ordering (top to bottom) of the windows A, B, C, and D, make some adjustments to the window depth entries to be stored in the Z-buffer system in the display adapter 22 and then notifies each affected application being run on the CPU 2 that all or part of its window must be redrawn. Each application running on the CPU 2 then transmits the subject matter through the display adapter 22 so that the windows associated with the application can be redrawn. The Z-buffer system 46 provides the clipping that the window manager provided in prior art computer systems.

In each embodiment, the Z-buffer system 46 implements a "Z-buffer algorithm". The algorithm implemented in the Z-buffer system 46 may be as follows:
(A) Initialize all the pixel values/intensity values C(X, Y) to "background".
(B) Initialize all the Z-buffer values Z(x, y) to the largest representable (farthest away) Z-value.
(C) For each polygon (window) on the display screen:
   For each pixel p(x, y) in the polygon:
   * Compute CP, the pixel's color/intensity value;
   * Compute ZP, the pixel's z-value; and
   * If ZP, is less than or equal to Z(x, y), then:
      o Store new color/intensity value: C(x, y) CP
      o Store new z-value: Z(x, y) Zp

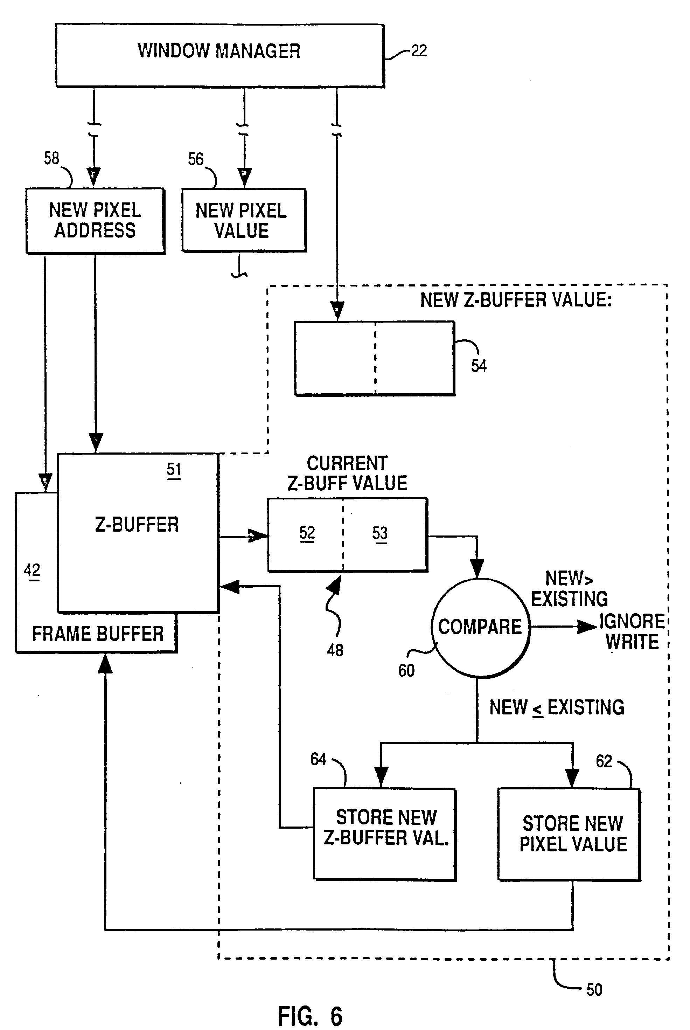

In the first embodiment (Fig. 6), the Z-buffer system 46 comprises a comparator 50 and a Z-buffer array 51, which contains the current Z-buffer depth values for the subject matter on the screen. Each Z-buffer value is specifically associated with a pixel color/intensity value having a specific pixel address based upon its relative position in the two-dimensional array formed by the frame buffer 42. The existing stored depth value contains both the depth of the window formed on the screen relative to the "background" reference position, which is typically the position farthest away from the viewer, and the depth of the particular pixel within the window in which the pixel is located.

For the purpose of storage within the Z-buffer array 51, the depth value is formed by concatenating the window depth with the pixel depth within the window. For example, in a register 48 for storing an existing pixel value from the Z-buffer array 51 for use in the comparator 50, the window depth occupies the higher bit positions 52 and the pixel depth within the window is stored in the lower bit positions 53 so that all pixels in a given window are considered to be in front of all pixels associated with a window lower in the stack. It should be noted, however, that for most applications, the individual pixel depth within the window is a constant.

In response to a request through the input device 12 to rearrange the windows on the display screen, the window manager determines the new relative depth positions of the plurality of windows A, B, C, and D, assigns a buffer depth value to each pixel in the frame buffer 42, and notifies each application whose display is affected to retransmit either all of the subject matter associated with its display or at least the portion thereof which has been affected by the proposed screen rearrangement.

The window manager then transmits the regenerated subject matter to the display adapter 22 for conversion into pixel values which can be stored in buffer register 56, together with its corresponding pixel address to register 58 and its corresponding Z-buffer depth value to register 54. For each pixel address, a conventional comparator 60 compares the new Z-buffer depth value from window register 54 to the existing Z-buffer depth value transferred into register 48 from its location in the Z-buffer array 46.

If the new Z-buffer depth value is larger than the existing Z-buffer depth value the comparator 60 directs the frame buffer 42 to ignore the "write" command from the window manager. In the event the new Z-buffer depth value is less than or equal to the existing Z-buffer depth value, the comparator 60 outputs a signal to the frame buffer 42 which notifies it to store the new pixel value at the given pixel address and also outputs a signal to the Z-buffer array to notify it to store the new Z-buffer depth value. This process is continued until each existing Z-buffer depth value associated with each affected pixel address in the frame buffer 42 is compared to a new Z-buffer depth value for that address.

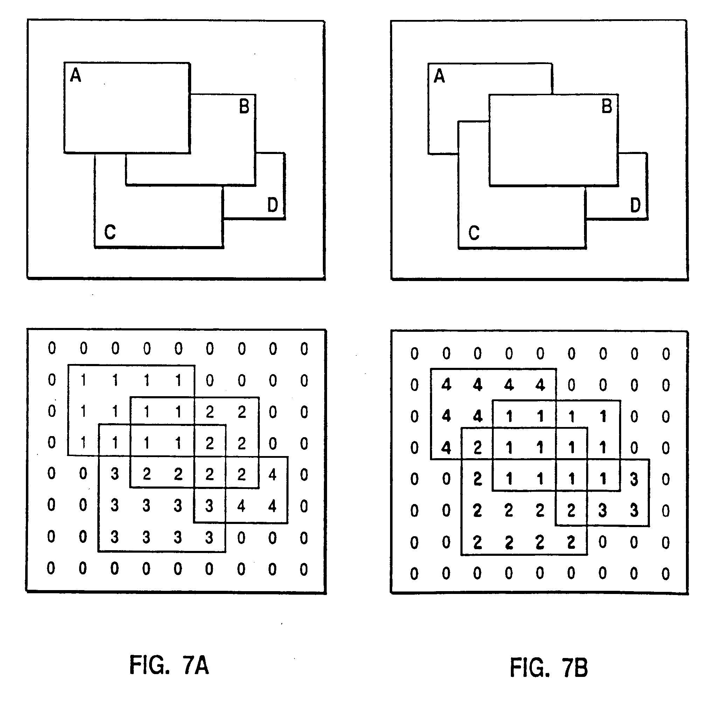

Thus, the Z-buffer system 46 of the first embodiment achieves the goal of allowing the Z-buffer system 46 to do the "clipping" for the window manager. As long as the "write" request from the window manager contains the Z-buffer depth value appropriate for the window associated with a particular application, the Z-buffer system 46 insures that only those pixels which are actually visible for the window are updated. In this embodiment, however, it is somewhat time-consuming for the window manager to change the relative stacking order of the windows. Fig. 7A shows the relative position of stacked windows A, B, C, and D on the screen of the display monitor 20 of the present invention, together with a stylized 9 x 8 grid of pixels representative of the subject matter being displayed on the screen wherein the numbers associated with each pixel position correspond to the depth of the associated window in which that particular pixel is located, e.g., 0, 1, 2, 3, and 4, for example. Fig. 7B shows a screen display of the same windows, except that window B has been pushed to the botton requiring that the depth values associated with all the pixels and all the windows must be updated before the windows can be withdrawn for the new window arrangement. A corresponding stylized 9 x 8 grid of pixels representative of the new windows positions is shown below the screen in Fig. 7B. The pixels that must be updated when moving the window A to the bottom of the stack of windows are shown in boldface in the stylized grid of Fig. 7B.

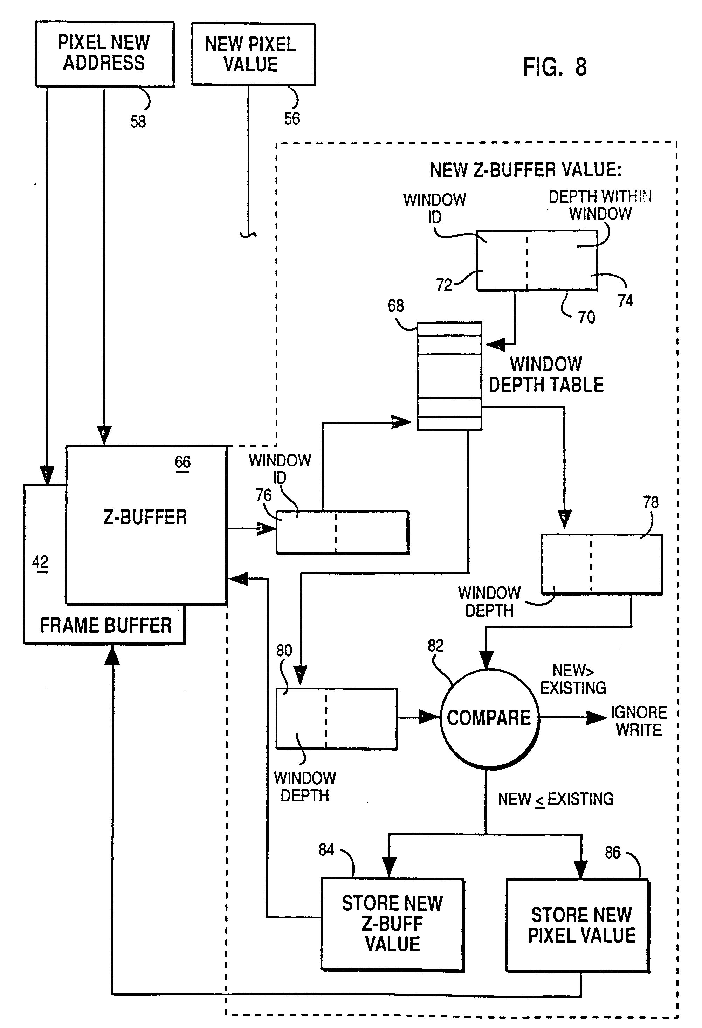

In the second embodiment (Fig. 8), the Z-buffer array 66 also contains the current Z-buffer depth value for the subject matter on the screen; however, the existing stored depth value is specified in a different matter from that in the first embodiment. In the second embodiment, the existing stored depth value contains both a window identification integer which identifies the particular window A, B, C, or D and a pixel depth value within the window formed on the screen. The window depth is then obtained by using the window identification integer as an index to a window depth table 68 containing the depth of each window relative to the referenced position. Preferably, the window depth table is a conventional RAM array.

Considering the second embodiment in more detail, the window manager, in response to a request from the input device 12 to rearrange the windows on the screen display, determines the new relative depth positions of the plurality of windows A, B, C, and D, assigns a new window depth value to each window and transmits the new window depth value to the window depth table 68. The window manager also notifies each application whose display is affected to retransmit either all of the subject matter associated with its display or at least the portion thereof which has been affected by the proposed screen rearrangement.

The transmitted subject matter is routed to the display adapter 22 for conversion into an array of pixel values by the processor 36 wherein each pixel can be sequentially stored in register 56, together with its corresponding pixel address in register 58, in the same manner as in the first embodiment. The window manager, however, transmits a different depth value to register 70 from that transferred to register 54 in the first embodiment, in that a window identification integer, rather than a true depth value, is stored in the higher bit positions 72 of register 70 and the pixel depth associated with the particular window is stored in lower bit positions 74.

In a corresponding manner, register 76 receives an existing depth value from Z-buffer array 66 for the particular pixel location wherein the value comprises a window identification integer in the higher bit positions of register 76 and a pixel depth within the window in the lower bit positions of register 76.

In the second embodiment, the Z-buffer depth values contained in registers 74 and 76 are then modified by substituting the appropriate depth value for each window identification from window depth table 68 prior to the Z-buffer value being stored in registers 78 and 80, respectively. A conventional comparator 82 then compares the new Z-buffer depth value in register 78 with the existing Z-buffer depth value in register 80. If the new value in register 78 is greater than the existing value of register 80, the comparator 82 instructs the frame buffer 42 to ignore the write command from the window manager and the particular pixel value for the particular pixel address is not updated. In the event the new value in register 78 is less than or equal to the existing value in register 80, the comparator 82 notifies the frame buffer 42 to accept the new pixel value at the particular pixel address and also notifies the Z-buffer 66 to update the particular Z-buffer value for the particular pixel address.

It should be noted that it is not necessary to change all the depth values for all pixel locations in the Z-buffer 66. For example, for an 8 bit window identification, at most only 256 window depth table entries must be changed. Whereas, if the windows cover most of the screen display surface on a 1024 x 1024 pixel display, about 1 million Z-buffer entries would have to be changed under the first embodiment. In order to obtain this benefit, however, the additional window buffer table 68 is required.

In order for table 68 not to cause a delay in updating the frame buffer and Z-buffer, the table 68 must read the window identification integers in registers 70 and 76 and transmit corresponding true depth values to registers 78 and 80 very rapidly. In fact, the processing must be at the same rate at which pixels are drawn. If the table 68 is implemented as another stage in the graphics pipeline, it will add slightly to the latency needed for the first pixel of an operation to appear, but it will not slow down the rate of drawing pixels.

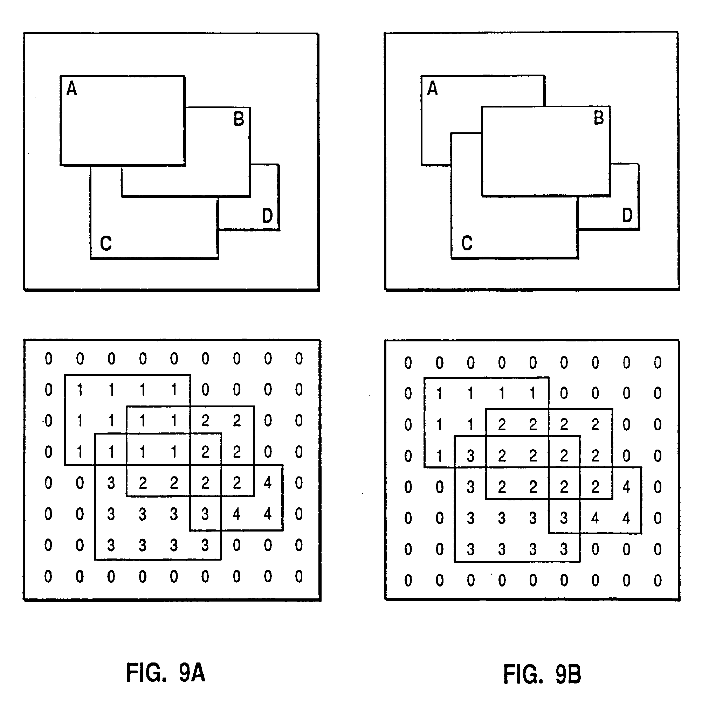

Figs. 9A and 9B show how the window identification portion of the depth value for the pixels change as window A is pushed from the top to the bottom. It should be noted that although some values have changed, they are not shown in boldface because they are not changed by the window manager, as was the case in the first embodiment. In this example, the window manager changed only the few entries in the window depth table (4 in this particular case). Window identification integers in the Z-buffer are then changed automatically as applications B and C redraw the windows by virtue of the new depth values in the window depth table 68.

In the third embodiment, the Z-buffer array 88 also contains a depth value consisting of a window identification integer and a pixel depth within the window for each pixel. Instead of a window depth table, however, the third embodiment uses a direct comparison of the new window identification integer sent to register 90 with the existing window depth interger transferred from the Z-buffer array 88 to register 92. The window identification integers for registers 90 and 92 are stored in the higher order bit locations and the pixel depth values are stored in the lower bit positions in a like manner to that in the other embodiments. Considering the third embodiment in more detail, the existing window identification integer from register 92 and the window identification integer from register 90 are read by a conventional comparator 94. If the comparator 94 determines that the window identifications are equal, it outputs an enable signal to an AND gate 96. In addition, the existing pixel depth value in register 92 is compared to the new pixel depth value from register 90 in a conventional comparator 98. If the new pixel depth value is less than or equal to the old pixel depth value, the comparator 98 outputs an enable signal to the AND gate 96. If the AND gate 96 does not receive an enable signal from both comparator 94 and comparator 96, the AND gate instructs the frame buffer 42 and Z-buffer 88 to ignore the write command from the window manager. If the AND gate 96 receives enable signals from both the comparator 94 and the comparator 98, it instructs the Z-buffer to store the new Z-buffer value 100 and instructs the frame buffer 42 to store the new pixel value 102 for the particular pixel location.

The Z-buffer of the third embodiment provides an advantage over the Z-buffer in the second embodiment in that a separate high speed window depth table is not needed. It should be noted that the comparisons by comparator 94 and comparator 98 may proceed in parallel. The disadvantage of this scheme is that the window manager must explicitly change the ownership of pixels by storing new window identification integers in the Z-buffer 88 when the windows are rearranged.

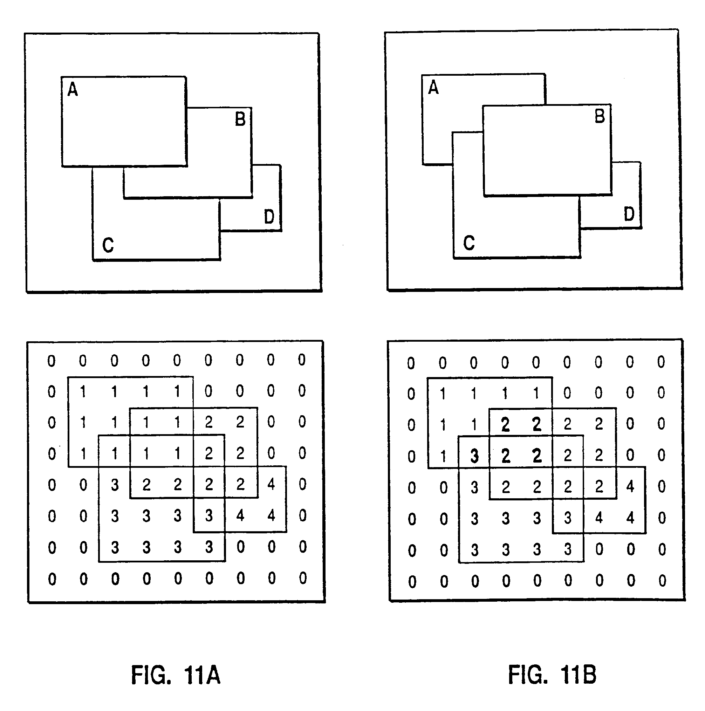

Figs. 11A and 11B show how the Z-buffer values change as window A is pushed from the top to the bottom of the stack. The Z-buffer values modified by the window manager are shown in boldface. It should be noted, however, that significantly fewer Z-values must be modified with the Z-buffer system of the third embodiment than with respect to the first embodiment, where all the pixels and all the windows required updating regardless of whether a window was in fact affected. In this embodiment, only the pixels in the overlapping areas of affected windows are updated.

In the fourth embodiment, the window manager transfers information to the display adapter in the same manner as in the third embodiment, but the way in which it is organized in the display adapter 22 is different. Considering the fourth embodiment in more detail, the display adapter 22 includes both a Z-buffer array 104 for storing the depth information of a pixel value within a window and a separate W-buffer array 106 for storing the window identification integer associated with each pixel location. In this embodiment, the window manager outputs the new window identification to register 108 in the display adapter. The associated pixel depth value within the window is loaded by the window manager into register 110. For any pixel location in the sequence, the existing window identification integer from the W-buffer 106 is stored in register 112 and a corresponding pixel depth value from Z-buffer 104 is stored in register 114. A conventional comparator 116 then compares the new window identification integer from register 108 with the existing window identification integer from register 112. If the window identifications are not equal, the comparator 116 outputs a signal to the Z-buffer and frame buffer to instruct them to ignore the write command from the window manager. If the window identification integers from register 108 and register 114 are equal, however, the comparator 116 generates an enable signal which is transmitted to a conventional comparator 118. Comparator 118 also compares the existing pixel depth value stored in register 114 with the new pixel depth value stored in register 110. If the new pixel depth value is greater than the existing pixel depth value, the comparator 118 outputs a command to the Z-buffer and frame buffer to ignore the write command from the window manager. In the event the new pixel depth value is less than or equal to the old pixel depth value and the comparator 118 has received an enable signal from comparator 116, comparator 118 outputs an enable signal to instruct the Z-buffer 104 to store the new pixel depth value and instructs the frame buffer 42 to store the new pixel value.

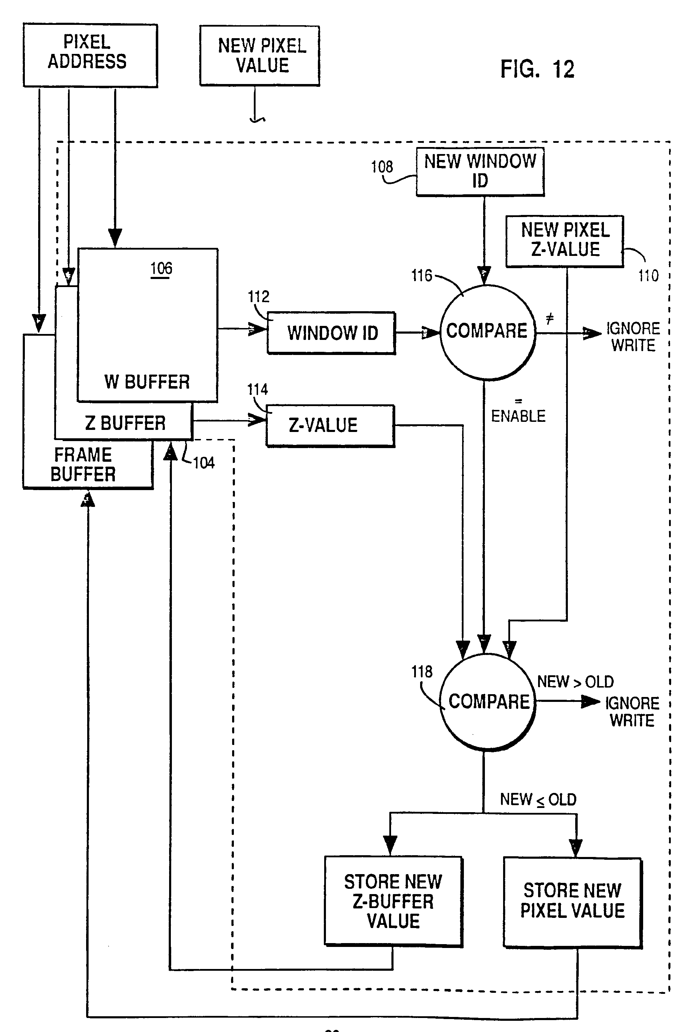

The fourth embodiment provides an advantage over the third embodiment in that the window identifications need be transferred to the display adapter 22 only once for each group of graphics operations. In addition, the window manager's write access to the new window identification register 108 on the display adapter 22 can be restricted to supervisor-state programs so that the register cannot be corrupted by application code. Once the ownership of the appropriate pixels has been set by the window manager and the proper window identification has been loaded to the register 108, it is possible to give the application program direct access to the display adapter 22 with the knowledge that it cannot corrupt areas of the screen outside the window(s) that it owns, which can result in a significant savings in overhead. Although Fig. 12 shows the two comparisons proceeding sequentially, it should be noted that the two comparisons can be done in parallel. It should also be noted that the Z-values modified by the window manager are limited to the pixels as are shown for the third embodiment in Fig. 11B.

In a fifth embodiment which may be suitable for the presentation of two-dimensional subject matter within each of the plurality of overlapping windows, the depth value associated with the subject matter within a window on a screen comprises only a window identification. The depth buffer array, therefore, stores only the existing window identification rather than a composite depth value comprising a window depth and a pixel depth within the window. In this embodiment, the window manager and the Z-buffer system disclosed for the first embodiment may be used with the following minor modifications. The Z-buffer array 51 and register 48 only store a window identification integer as the Z-buffer depth value and the window manager 22 outputs only a new window identification integer to register 54. In all other respects, the operations of the comparator 50 disclosed for the first embodiment operates in substantially the same manner as previously described. Although the fifth embodiment may not be suitable for displaying complex subject matter within a window, it may be a simple solution for many types of window applications.

While the invention has been particularly shown and described with reference to the preferred embodiments, it will be understood by those skilled in the art that various other changes in form and detail may be made without departing from the scope of the invention.

## Claims

1. A computer system having: a display adapter (22) with a refresh buffer (42); an interactive display terminal (20) with a screen display on which is formed a plurality of at least partially overlapping windows (28 to 34), each window displaying subject matter generated by one of a plurality of applications (A to n) running on the computer system and then transmitted to the display adapter; means for requesting a rearrangement of the depths of the plurality of windows relative to a reference position from a current arrangement to a new arrangement; manager means (18) for determining the depth of the subject matter associated with each of the windows, wherein said manager means, in response to the input request, determines the new depth of the subject matter in each of the plurality of windows affected by the requested rearrangement and outputs new depth values for the affected subject matter and instructs each application with a window with affected subject matter to retransmit at least the portion of the subject matter associated with each window which will become visible as a result of the rearrangement; and depth buffer means (46) in the display adapter for storing the depth values of the subject matter associated with each of the windows displayed on the screen, wherein said depth buffer means includes means (50) for comparing the depth value for the re-transmitted subject matter to the depth value for the displayed subject matter in response to the input request and, if the retransmitted subject matter has a depth value associated with the same window or a window closer to the viewer, the comparator means instructs the refresh buffer to store the retransmitted subject matter for refreshing the screen.

2. A computer system as claimed in claim 1, wherein said comparator means notifies the depth buffer means to store the depth values for the retransmitted subject matter stored in the refresh buffer.

3. A computer system as claimed in claim 1 or claim 2, wherein if the new subject matter has a depth value associated with a window farther from the viewer, said comparator means inhibits the refresh buffer storing the retransmitted subject matter and the screen is refreshed with the subject matter currently in the refresh buffer.

4. A computer system as claimed in claims 1, 2 or 3, wherein the subject matter associated with each of the windows is stored in the refresh buffer as a set of pixel values having specific pixel addresses; and said manager means assigns a depth value to each pixel value in each pixel set associated with each window currently on the screen, and, in response to the input request, assigns new depth values to the set of pixel values which are affected by the input request, and transmits the new depth values to said depth buffer means.

5. A computer system as claimed in any preceding claim, wherein the depth value for the subject matter comprises a concatenation of the window depth value for the window for the subject matter and the depth value of the subject matter within the window for the subject matter.

6. A computer system as claimed in claim 1, wherein the depth value for the subject matter associated with a window formed on the screen comprises a window identification and a pixel depth value representative of the depth of the subject matter within the window for the subject matter; said buffer means stores the current window identifications for the plurality of overlapping windows; said comparator means includes a window depth table which stores the current depth value associated with each window identification; said manager means, in response to the request from said input means, outputs a new depth position for each window identification listed in the window depth table and the new window identifications and pixel depth values to said comparator means; and the comparator means reads from said window depth table the depth value of the window identification currently in the buffer means and the depth value for the new window identification.and compares the respective depth values for the windows obtained from said window depth table.

7. A computer system as claimed in claim 6, wherein each depth value comprises a concatenation of the window identification and the pixel depth value within the window; and said comparator compares the concatenated value currently in said buffer means with the new concatenated value.

8. A computer system as claimed in claim 1, wherein the depth value for the subject matter within a window comprises a window identification and a pixel depth value representative of the depth of the subject matter within the window for the subject matter; said buffer means stores the current window identifications and associated pixel depth values for the plurality of overlapping windows; said manager means, in response to the request from said input means, outputs the new window identifications and associated pixel depth values for the plurality of overlapping windows to said comparator means; said comparator means comprises first comparator means for comparing the new window identification with the current window identification wherein, if the current window and new window identifications are equal, the first comparator outputs a first enable signal; second comparator means for comparing the current pixel depth value associated with each current window identification with the new pixel depth value associated with the new window identification wherein, if the new pixel value is less than or equal to the current pixel depth value, the second comparator outputs a second enable signal; and logic means coupled to the outputs of said first and second comparators, for outputing an update signal to said refresh buffer and said buffer means in response to the receipt of first and second enable signals from said comparators, wherein the refresh buffer accepts the new pixel values and the buffer means accepts the new window identification in response to the update signal.

9. A computer system as claimed in claim 1, wherein
the depth value associated with the subject matter of each window comprises a window identification and a pixel depth value representative of the depth of the subject matter within the window for the subject matter; said buffer means comprises first buffer means for storing the current window identification for the subject matter being displayed on each of the overlapping windows; and second buffer means for storing the current pixel depth value of the subject matter being displayed on each of the overlapping screens; said manager means, in response to the request from said input means, outputs the new window identification and pixel depth value to said comparator means and a new depth position for each window identification to the window identification table, said comparator means comprises first comparator means coupled to the first buffer means for comparing the new window identification with the current window identification wherein, if the current and new window identifications are the same, the first comparator outputs an enable signal to the second comparator; and second comparator means coupled to said second buffer means for comparing the current pixel value with the new pixel value upon receiving an enable signal from said first comparator, wherein, if the new pixel value is less than or equal to the current pixel depth value, said second comparator outputs update signals to the first and second buffer means whereupon said first buffer means stores the new window identification and said second buffer means stores the new depth value.

10. A computer system as claimed in claim 1, wherein the depth value associated with the subject matter within a window on a screen comprises a window identification; said buffer means stores the current window identification for the subject matter being displayed in each of the overlapping windows; said manager means, in response to the request of the input means, outputs a new window identification; said comparator means compares the window identification of the newly transmitted subject matter to the window identification of the currently displayed subject matter and, if the new window identification identifies the same window or a window closer to the viewer, the comparator outputs enable signals to the refresh buffer and buffer means; and in response to the enable signals, the refresh buffer stores the new subject matter for refreshing the screen display with the new subject matter and the buffer means stores the new window identification.

11. A computer system according to any one of the preceding claims, wherein said depth buffer means is a RAM array located in the display adapter; and said manager means instructs each application which is affected by the window rearrangement to retransmit the subject matter associated with each application directly to the display adapter.

## Patentansprüche

1. Ein Computersystem, das folgendes umfaßt: einen Anzeigeadapter (22) mit einem Auffrischungspuffer (42); einen interaktiven Anzeigebildschirm (20) mit einer Bildschirmanzeige, auf dem eine Mehrzahl an mindestens teilweise sich überlappenden Fenstern (28 bis 34) gebildet wird, wobei jedes Fenster Anzeigebilder anzeigt, die durch eine aus einer Mehrzahl an Anwendungen (A bis n) erzeugt wurden, die auf dem Computersystem laufen, und anschließend an den Anzeigeadapter übertragen wurden; ein Mittel zur Anforderung einer Neuanordnung der Tiefen der Mehrzahl an Fenstern bezüglich einer Referenzposition von einer aktuellen Anordnung zu einer neuen Anordnung; ein Managermittel (18) zur Bestimmung der Tiefe des Anzeigebilds, das zu jedem der Fenster gehört, in dem das genannte Managermittel auf die Eingabeanforderung hin die neue Tiefe des Anzeigebilds in jedem der Mehrzahl der Fenster bestimmt, die durch die angeforderte Neuanordnung betroffen sind, und neue Tiefenwerte für das betreffende Anzeigebild ausgibt und jeder Anwendung mit einem Fenster mit betreffendem Anzeigebild befiehlt, mindestens denjenigen Teil des Anzeigebilds erneut zu übertragen, der zu jedem Fenster gehört und der als Ergebnis der Neuanordnung sichtbar wird; und ein Tiefenpuffermittel (46) im Anzeigeadapter zur Speicherung der Tiefenwerte des Anzeigebilds, das zu jedem derjenigen Fenster gehört, die auf dem Bildschirm angezeigt werden, wobei das genannte Tiefenpuffermittel ein Mittel (50) zum Vergleich des Tiefenwerts für das erneut übertragene Anzeigebild mit dem Tiefenwert des angezeigten Anzeigebilds auf die Eingabeanforderung hin umfaßt, und, wenn das erneut übertragene Anzeigebild einen Tiefenwert aufweist, der zum selben Fenster oder zu einem näher am Betrachter liegenden Fenster gehört, befiehlt das Vergleichsmittel dem Auffrischungspuffer, das erneut übertragene Anzeigebild zur Wiederauffrischung des Bildschirms zu speichern.

2. Ein Computersystem gemäß Anspruch 1, wobei das genannte Komparatormittel dem Tiefenpuffermittel befiehlt, die Tiefenwerte für das erneut übertragene Anzeigebild, das im Auffrischungspuffer gespeichert ist, zu speichern.

3. Ein Computersystem gemäß Anspruch 1 oder Anspruch 2, wobei, wenn das neue Anzeigebild einen Tiefenwert aufweist, das zu einem vom Betrachter weiter entfernt liegenden Fenster gehört, das genannte Komparatormittel den Auffrischungspuffer daran hindert, das erneut übertragene Anzeigebild zu speichern, und der Bildschirm mit dem derzeit im Auffrischungspuffer befindlichen Anzeigebild wieder aufgefrischt wird.

4. Ein Computersystem gemäß Anspruch 1, 2 oder 3, wobei das Anzeigebild, das zu jedem der Fenster gehört, im Auffrischungspuffer als Satz aus Pixelwerten mit spezifischen Pixeladressen gespeichert wird; und wobei das genannte Managermittel jedem Pixelwert in jedem Pixelsatz, der jedem derzeit auf dem Bildschirm befindlichen Fenster zugeordnet ist, einen Tiefenwert zuordnet und auf die Eingabeaufforderung hin der Gruppe von Pixelwerten, die durch die Eingabeaufforderung betroffen sind, neue Tiefenwerte zuordnet und die neuen Tiefenwerte an das genannte Tiefenpuffermittel überträgt.

5. Ein Computersystem gemäß allen vorherigen Ansprüchen, wobei der Tiefenwert für das Anzeigebild eine Verkettung des Fenstertiefenwerts für das Fenster für das Anzeigebild und des Tiefenwerts des Anzeigebilds innerhalb des Fensters für das Anzeigebild umfaßt.

6. Ein Computersystem gemäß Anspruch 1, wobei der Tiefenwert für das Anzeigebild, das zu einem Fenster gehört und das auf dem Bildschirm gebildet wird, eine Fensteridentifikation und einen Pixeltiefenwert umfaßt, die die Tiefe des Anzeigebilds innerhalb des Fensters für das Anzeigebild darstellen; wobei das genannte Puffermittel die aktuellen Fensteridentifikationen für die Mehrzahl sich überlappender Fenster speichert; das genannte Komparatormittel umfaßt eine Fenstertiefentabelle, die den aktuellen Tiefenwert speichert, der zu jeder Fensteridentifikation gehört; das genannte Managermittel gibt auf die Anforderung des genannten Eingabemittels hin für jede in der Fenstertiefentabelle aufgelistete Fensteridentifikation eine neue Tiefenposition sowie die neuen Fensteridentifikationen und Pixeltiefenwerte an das genannte Komparatormittel aus; und das genannte Komparatormittel liest aus der genannten Fenstertiefentabelle den Tiefenwert der derzeit im Puffermittel befindlichen Fensteridentifikation sowie den Tiefenwert für die neue Fensteridentifikation aus und vergleicht die entsprechenden Tiefenwerte für die aus der genannten Fenstertiefentabelle entnommenen Fenster.

7. Ein Computersystem gemäß Anspruch 6, wobei jeder Tiefenwert eine Verkettung der Fensteridentifikation und des Fenstertiefenwerts innerhalb des Fensters umfaßt; und wobei der genannte Komparator den Verkettungswert, der sich derzeit im genannten Puffermittel befindet, mit dem neuen Verkettungswert vergleicht.

8. Ein Computersystem gemäß Anspruch 1, wobei der Tiefenwert für das Anzeigebild innerhalb eines Fensters eine Fensteridentifikation und einen Pixeltiefenwert umfaßt, der repräsentativ für die Tiefe des Anzeigebilds innerhalb des Fensters für das Anzeigebild ist; das genannte Puffermittel speichert die derzeitigen Fensteridentifikationen und dazugehörigen Pixeltiefenwerte für die Mehrzahl sich überlappender Fenster; das genannte Managermittel gibt auf die Anforderung des genannten Eingabemittels hin die neuen Fensteridentifikationen und dazugehörigen Pixeltiefenwerte für die Mehrzahl sich überlappender Fenster an das genannte Komparatormittel aus; das genannte Komparatormittel umfaßt das erste Komparatormittel für den Vergleich der neuen Fensteridentifikation, in dem, wenn die aktuellen Fensteridentifikationen und die neuen Fensteridentifikationen gleich sind, der erste Komparator ein erstes Aktivierungssignal ausgibt; ein zweites Komparatormittel für den Vergleich des derzeitigen Pixeltiefenwerts, der zu jeder derzeitigen Fensteridentifikation, wobei der neue Pixeltiefenwert mit der neuen Fensteridentifikation zusammenhängt, wobei, wenn der neue Pixeltiefenwert niedriger als oder gleich groß wie der aktuelle Pixeltiefenwert ist, der zweite Komparator ein zweites Aktivierungssignal ausgibt; und ein Logikmittel, das an die Ausgaben des genannten ersten und des genannten zweiten Komparators gekoppelt ist, und bei Empfang des ersten und zweiten Aktivierungssignals von den genannten Komparatoren zur Ausgabe eines Aktivierungssignals an den genannten Auffrischungspuffer dient, wobei der Auffrischungspuffer die neuen Pixelwerte aufnimmt und das Puffermittel auf das Aktivierungssignal hin die neue Fensteridentifikation aufnimmt.

9. Ein Computersystem gemäß Anspruch 1, wobei der Tiefenwert, der mit dem Anzeigebild jedes Fensters zusammenhängt, eine Fensteridentifikation und einen Pixeltiefenwert umfaßt, der repräsentativ ist für die Tiefe des Anzeigebilds innerhalb des Fensters für das Anzeigebild; das genannte Puffermittel umfaßt ein erstes Puffermittel zur Speicherung der aktuellen Fensteridentifikation für das Anzeigebild, das auf jedem der sich überlappenden Fenster angezeigt wird; und ein zweites Puffermittel zur Speicherung des aktuellen Pixeltiefenwerts des Anzeigebilds, das auf jedem der sich überlappenden Bildschirme angezeigt wird; das genannte Managermittel gibt bei einer Anforderung vom genannten Eingabemittel die neue Fensteridentifikation und den neuen Pixeltiefenwert an das genannte Komparatormittel sowie eine neue Tiefenposition für jede Fensteridentifikation an die Fensteridenti fikationstabelle aus, wobei das genannte Komparatormittel ein erstes Komparatormittel umfaßt, das an das erste Puffermittel gekoppelt ist und für den Vergleich der neuen Fensteridentifikation mit der derzeitigen Fensteridentifikation dient, wobei, wenn die derzeitige und die neue Fensteridentifikation gleich sind, der erste Komparator an den zweiten Komparator ein Aktivierungssignal ausgibt; und ein zweites Komparatormittel umfaßt, das an das zweite Puffermittel gekoppelt ist und bei Empfang eines Aktivierungssignals vom ersten Komparator für den Vergleich des derzeitigen Pixelwerts mit dem neuen Pixelwert dient, wobei, wenn der neue Pixelwert kleiner als oder gleich groß wie der derzeitige Pixeltiefenwert ist, der genannte zweite Komparator Aktivierungssignale an das erste und an das zweite Puffermittel ausgibt, wobei das genannte erste Puffermittel die neue Fensteridentifikation und das genannte zweite Puffermittel den neuen Tiefenwert speichert.

10. Ein Computersystem gemäß Anspruch 1, wobei der Tiefenwert, der mit dem Anzeigebild innerhalb eines Fensters auf einem Bildschirm zusammenhängt, eine Fensteridentifikation umfaßt; das genannte Puffermittel speichert die derzeitige Fensteridentifikation für das Themengenbiet, das in jedem der sich überlappenden Fenster angezeigt wird; das genannte Managermittel gibt bei einer Anforderung des Eingabemittels eine neue Fensteridentifikation aus; das genannte Komparatormittel vergleicht die Fensteridentifikation des neu übertragenen Anzeigebilds mit der Fensteridentifikation des derzeit angezeigten Anzeigebilds und, wenn die neue Fensteridentifikation dem Betrachter dasselbe Fenster oder ein näher am Betrachter liegendes Fenster identifiziert, der Komparator gibt Aktivierungssignale an den Auffrischungspuffer und an das Puffermittel aus; und bei Empfang der Aktivierungssignale speichert der Auffrischungspuffer das neue Anzeigebild zur Wiederauffrischung der Bildschirmanzeige mit dem neuen Anzeigebild und das Puffermittel speichert die neue Fensteridentifikation.

11. Ein Computersystem gemäß allen vorherigen Ansprüchen, wobei das genannte Tiefenpuffermittel ein RAM-Array ist, das sich im Anzeigeadapter befindet; und das genannte Managermittel befiehlt jeder Anwendung, die durch die Fensterneuanordnung beeinträchtigt ist, das zu jeder Anwendung gehörende Anzeigebild direkt zum Anzeigeadapter zu übertragen.

## Revendications

1. Système d'ordinateur comportant : un adaptateur vidéo (22) comportant une mémoire tampon de rafraîchissement (42), un terminal d'affichage interactif (20) avec un écran de visualisation sur lequel est formé une pluralité de fenêtres se recouvrant au moins partiellement (28 à 34), chaque fenêtre présentant le contenu produit par une d'une pluralité d'application (A à n) qui est exécutée sur le système d'ordinateur et ensuite transmise à l'adaptateur vidéo, un moyen pour demander une redisposition des profondeurs de la pluralité des fenêtres par rapport à une position de référence à partir d'une disposition courante vers une nouvelle disposition, un moyen de gestionnaire (18) pour déterminer la profondeur du contenu associé à chacune des fenêtres, dans lequel ledit moyen de gestionnaire, en réponse à la demande d'entrée, détermine la nouvelle profondeur du contenu dans chacune de la pluralité des fenêtres affectées par la redisposition demandée et sort de nouvelles valeurs de profondeur pour le contenu affecté et ordonne à chaque application ayant une fenêtre dont le contenu est affecté de retransmettre au moins la partie du contenu associé à chaque fenêtre qui deviendra visible, comme résultat de la redisposition et un moyen de mémoire tampon de profondeur (46) dans l'adaptateur vidéo, pour mémoriser les valeurs de profondeur du contenu associé à chacune des fenêtres montrées sur l'écran, dans lequel ledit moyen de mémoire tampon de profondeur comporte un moyen (50) pour comparer la valeur de profondeur pour le contenu retransmis à la valeur de profondeur pour le contenu présenté en réponse à la demande d'entrée et si le contenu retransmis présente une valeur de profondeur associée à la même fenêtre ou à une fenêtre plus près de l'observateur, le moyen de comparateur ordonne à la mémoire tampon de rafraîchissement de mémoriser le contenu retransmis pour rafraîchir l'écran.

2. Système d'ordinateur selon la revendication 1, dans lequel ledit moyen de comparateur notifie au moyen de mémoire tampon de profondeur, de mémoriser les valeurs de profondeur pour le contenu retransmis mémorisé dans la mémoire tampon de rafraîchissement.

3. Système d'ordinateur selon la revendication 1 ou la revendication 2, dans lequel si le nouveau contenu présente une valeur de profondeur associée à une fenêtre plus éloignée de l'observateur, ledit moyen de comparateur interdit à la mémoire tampon de rafraîchissement de mémoriser le contenu retransmis et l'écran est rafraîchi avec le contenu actuel de la mémoire tampon de rafraîchissement.

4. Système d'ordinateur selon la revendication 1, 2 ou 3, dans lequel le contenu associé à chacune des fenêtres est mémorisé dans la mémoire tampon de rafraîchissement comme un ensemble de valeurs de pixel ayant des adresses de pixel spécifiques et ledit moyen de gestionnaire affecte une valeur de profondeur à chaque valeur de pixel dans chaque ensemble de pixels associé à chaque fenêtre actuellement sur l'écran et, en réponse à la demande d'entrée, affecte de nouvelles valeurs de profondeur à l'ensemble des valeurs de pixels qui sont affectées par la demande d'entrée et transmet les nouvelles valeurs de profondeur audit moyen de mémoire tampon de profondeur.

5. Système d'ordinateur selon l'une quelconque des revendications précédentes, dans lequel la valeur de profondeur pour le contenu comprend une concaténation de la valeur de profondeur de la fenêtre pour la fenêtre du contenu et la valeur de profondeur du contenu qui est à l'intérieur de la fenêtre du contenu.

6. Système d'ordinateur selon la revendication 1, dans lequel la valeur de profondeur du contenu associé à une fenêtre formée sur l'écran comprend une valeur d'identification de fenêtre et une valeur de profondeur de pixel représentative de la profondeur du contenu à l'intérieur de la fenêtre qui concerne le contenu, ledit moyen de mémoire tampon mémorise les identifications actuelles de fenêtre pour la pluralité des fenêtres se recouvrant, ledit moyen de comparateur comporte une table de profondeur de fenêtre qui mémorise la valeur de profondeur actuelle associée à chaque identification de fenêtre, ledit moyen de gestionnaire, en réponse à la demande provenant dudit moyen d'entrée, sort une nouvelle position de profondeur pour chaque identification de fenêtre listée dans la table de profondeur de fenêtre et les nouvelles identifications de fenêtre et valeurs de profondeur de pixel vers ledit moyen de comparateur et le moyen de comparateur lit à partir de la table de profondeur de fenêtre, la valeur de profondeur de l'identification de fenêtre actuellement dans le moyen de mémoire tampon et la valeur de profondeur pour la nouvelle identification de fenêtre et compare les valeurs de profondeur respectives pour les fenêtres obtenues à partir de la table de profondeur de fenêtre.

7. Système d'ordinateur selon la revendication 6, dans lequel chaque valeur de profondeur comprend une concaténation de l'identification de fenêtre et de la valeur de profondeur de pixel à l'intérieur de la fenêtre et ledit comparateur compare la valeur concaténée actuellement dans ledit moyen de mémoire tampon à la nouvelle valeur concaténée.

8. Système d'ordinateur selon la revendication 1, dans lequel la valeur de profondeur pour le contenu à l'intérieur d'une fenêtre comprend une identification de fenêtre et une valeur de profondeur de pixel représentative de la profondeur du contenu à l'intérieur de la fenêtre concernant le contenu, ledit moyen de mémoire tampon mémorise les identifications actuelles de fenêtre et les valeurs de profondeur de pixel associées pour la pluralité des fenêtres se recouvrant, ledit moyen de gestionnaire, en réponse à la demande provenant dudit moyen d'entrée, sort les nouvelles identifications de fenêtre et valeurs de profondeur de pixel associées pour la pluralité des fenêtres se recouvrant vers ledit moyen de comparateur, ledit moyen de comparateur comprend un premier moyen de comparateur pour comparer la nouvelle identification de fenêtre à l'identification de fenêtre actuelle dans celui-ci et si les identifications de fenêtre actuelle et de nouvelle fenêtre sont égales, le premier comparateur sort un premier signal de validation, un second moyen de comparateur pour comparer la valeur de profondeur de pixel actuelle associée à chaque identification de fenêtre actuelle à la nouvelle valeur de profondeur de pixel associée à la nouvelle identification de fenêtre dans lequel si la nouvelle valeur de pixel est inférieure ou égale la valeur de profondeur de pixel actuelle, le second comparateur sort un second signal de validation et un moyen logique couplé aux sorties desdits premier et second comparateurs pour sortir un signal de mise à jour vers ladite mémoire tampon de rafraîchissement et ledit moyen de mémoire tampon en réponse à la réception des premier et second signaux de validation provenant desdits comparateurs, dans lequel la mémoire tampon de rafraîchissement accepte les nouvelles valeurs de pixel et le moyen de mémoire tampon accepte la nouvelle identification de fenêtre en réponse au signal de mise à jour.

9. Système d'ordinateur selon la revendication 1, dans lequel la valeur de profondeur associée au contenu de chaque fenêtre comprend une identification de fenêtre et une valeur de profondeur de pixel représentative de la profondeur du contenu à l'intérieur de la fenêtre du contenu, ledit moyen de mémoire tampon comprend un premier moyen de mémoire tampon pour mémoriser l'identification de fenêtre actuelle du contenu qui doit être présenté sur chacune des fenêtres se recouvrant et un second moyen de mémoire tampon pour mémoriser la valeur de profondeur de pixel actuelle du contenu qui est présenté sur chacun des écrans se chevauchant, ledit moyen de gestionnaire, en réponse à la demande provenant dudit moyen d'entrée, sort la nouvelle identification de fenêtre et la nouvelle valeur de profondeur de pixel vers ledit moyen de comparateur et une nouvelle position de profondeur pour chaque identification de fenêtre vers la table d'identification de fenêtre, ledit moyen de comparateur comprend un premier moyen de comparateur couplé au premier moyen de mémoire tampon pour comparer la nouvelle identification de fenêtre à l'identification de fenêtre actuelle dans lequel, si les identifications de fenêtre actuelle et nouvelle sont les mêmes, le premier comparateur sort un signal de validation vers le second comparateur et un second moyen de comparateur couplé audit second moyen de mémoire tampon pour comparer la valeur de pixel actuelle à la nouvelle valeur de pixel sur réception d'un signal de validation provenant dudit premier comparateur dans lequel, si la nouvelle valeur de pixel est inférieure ou égale à la valeur de profondeur de pixel actuelle, ledit second comparateur sort des signaux de mise à jour vers les premier et second moyens de mémoire tampon sur quoi, ledit premier moyen de mémoire tampon mémorise la nouvelle identification de fenêtre et ledit second moyen de mémoire tampon mémorise la nouvelle valeur de profondeur.

10. Système d'ordinateur selon la revendication 1, dans lequel la valeur de profondeur associée au contenu à l'intérieur d'une fenêtre sur écran comprend une identification de fenêtre, ledit moyen de mémoire tampon mémorise l'identification de fenêtre actuelle du contenu qui est présenté dans chacune des fenêtres se recouvrant, ledit moyen de gestionnaire, en réponse à la demande du moyen d'entrée, sort une nouvelle identification de fenêtre, ledit moyen de comparateur compare l'identification de fenêtre du contenu nouvellement transmis à l'identification de fenêtre du contenu actuellement présenté et si la nouvelle identification de fenêtre identifie la même fenêtre ou une fenêtre plus près de l'observateur, le comparateur sort des signaux de validation vers la mémoire tampon de rafraîchissement et le moyen de mémoire tampon et en réponse aux signaux de validation la mémoire tampon de rafraîchissement mémorise le nouveau contenu pour rafraîchir l'écran de visualisation avec le nouveau contenu et le moyen de mémoire tampon mémorise la nouvelle identification de fenêtre.

11. Système d'ordinateur selon l'une quelconque des revendications précédentes, dans lequel ledit moyen de mémoire tampon de profondeur est un tableau de mémoire vive placé dans l'adaptateur vidéo et ledit moyen de gestionnaire ordonne à chaque application qui est affectée par la redisposition de fenêtre de retransmettre le contenu associé à chaque application directement à l'adaptateur vidéo.
